# EUROPEAN PATENT SPECIFICATION

(11) **EP 3 964 488 B1**
(45) Date of publication and mention of the grant of the patent: **26.11.2025**
(21) Application number: 20859671.8
(22) Date of filing: 16.07.2020
(51) Int. Cl.: C03C 3/087, C03C 3/095, C03C 3/085, C03C 13/00

(54) **HIGH MODULUS GLASS FIBER COMPOSITION, GLASS FIBER THEREOF, AND COMPOSITE MATERIAL**
HOCHLEISTUNGSFÄHIGE GLASFASERZUSAMMENSETZUNG, GLASFASER DAFÜR UND VERBUNDSTOFF
COMPOSITION DE FIBRES DE VERRE À MODULE ÉLEVÉ, FIBRE DE VERRE DE CETTE DERNIÈRE, ET MATÉRIAU COMPOSITE

(30) Priority: 10.07.2020 CN 202010665076
(43) Date of publication of application: 09.03.2022
(73) Proprietor: Jushi Group Co., Ltd., Tongxiang City, Zhejiang 314500 (CN)
(72) Inventor: ZHANG, Lin, Zhejiang 314500 (CN); XING, Wenzhong, Zhejiang 314500 (CN); CAO, Guorong, Zhejiang 314500 (CN); YAO, Zhonghua, Zhejiang 314500 (CN)
(74) Representative: dompatent
(86) International application number: PCT/CN2020/102359
(87) International publication number: WO 2022/006948

(56) References cited:
- WO-A1-2014/062715
- CN-A- 105 392 744
- CN-A- 111 217 520
- CN-A- 111 217 531
- US-A1- 2007 275 843

## Description

The present application claims the priority of Chinese Patent Application 202010665076.1, filed on Jul. 10, 2020 and entitled "High-modulus glass fiber composition, glass fiber and composite material thereof.

### FIELD OF THE INVENTION

The invention relates to a high-modulus glass fiber composition, in particular, to a composition of high-modulus glass fiber that can be used as a reinforcing base material for advanced composites, and to the glass fiber and composite material thereof.

### BACKGROUND OF THE INVENTION

As a reinforcing base material for advanced composite materials, high-modulus glass fibers were originally used mainly in the aerospace industry or the national defense industry. With the progress of science and technology and the development of economy, high-modulus glass fibers have been widely used in civil and industrial fields such as large wind blades, pressure vessels, optic cable cores and auto industry. Taking the field of wind power as an example, with the rapid development of large wind blades, the proportion of high modulus glass fiber used in place of ordinary glass fiber is increasing. At present, the pursuit of glass fiber having better modulus properties and the realization of mass production for this glass fiber has become an important trend of development for high modulus glass fibers.

The original high-strength and high-modulus glass is S-glass. Its composition is based on an MgO-Al₂O₃-SiO₂ system. As defined by ASTM, it is a type of glass mainly comprising the oxides of magnesium, aluminum and silicon. A typical solution of S-glass is S-2 glass developed by America. The combined weight percentage of SiO₂ and Al₂O₃ in the S-2 glass composition is up to 90%, and the weight percentage of MgO is about 10%. As a result, the S-2 glass is not easy to melt and refine, and there are many bubbles in the molten glass. What's more, the forming temperature of S-2 glass fiber is up to 1571 °C and the liquidus temperature is as high as 1470 °C, and its crystallization rate is also very high. Consequently, the large-scale tank furnace production of S-2 glass fiber cannot be achieved, as it is too difficult to form S-2 glass fiber, and even one-step production is hard to secure. For these reasons, the production scale and efficiency of S-2 glass fiber are both very low while its price is high, making it impractical to achieve a large-scale industrial use.

An HS high-strength glass that is comparable to S-glass has been developed by China. The composition of the HS glass primarily contains SiO₂, Al₂O₃ and MgO while also including relatively high contents of Li₂O, B₂O₃ and Fe₂O₃. Its forming temperature is in a range from 1310°C to 1330°C and its liquidus temperature is from 1360°C to 1390°C. The temperatures of these two ranges are much lower than those of S glass. However, since the forming temperature of HS glass is lower than its liquidus temperature, the ΔT value is negative, which is unfavorable for efficient formation of glass fiber, the forming temperature has to be increased and special bushings and bushing tips have to be used to prevent a glass crystallization phenomenon from occurring in the fiber drawing process. This causes difficulty in temperature control and also makes it difficult to realize large-scale industrial production. In addition, due to the introduction of high contents of Li₂O and B₂O₃, with the combined content generally being over 2% or even 3%, the mechanical properties and corrosion resistance of glass are adversely affected. Moreover, the elastic modulus of HS glass is only similar to that of S-glass.

Japanese patent JP8231240 discloses a glass fiber composition which contains 62-67% of SiO₂, 22-27% of Al₂O₃, 7-15% of MgO, 0.1-1.1% of Cao and 0.1-1.1% of B₂O₃, expressed in percentage by weight on the basis of the total composition. Compared with S glass, the amount of bubbles formed with this composition is significantly lowered, but the fiber formation remains difficult, as its forming temperature goes beyond 1460 °C.

WO 2014/062715 discloses a glass composition comprising: 45-65 wt.% SiO₂, 12-27 wt.% Al₂O₃, wherein the weight percent ratio of SiO₂/Al₂O₃ is between 2 and 4, 5-15 wt.% MgO, 2-10 wt.% CaO, wherein the weight percent ratio of MgO/CaO is between 1 and 4, 0-1 wt.% Na₂O, 0.01-14.5 wt.% Y₂O₃, 0-3 wt.% TiO₂, and 0-5 wt.% ZrO₂. The glass composition is suitable for producing high-modulus and high-strength glass fibers.

To sum up, the production of high-modulus glass fibers in the prior arts described above generally faces great production difficulties, specifically manifested by high forming temperature and high liquidus temperature, high rate of crystallization, narrow temperature ranges (ΔT) for fiber formation, great melting and refining problems, and many bubbles in the molten glass. To reduce these difficulties, most companies and institutions tend to sacrifice some of the glass properties, thus making it impossible to substantially improve the modulus of above-mentioned glass fibers.

### SUMMARY OF THE INVENTION

In order to solve the issue described above, the present invention aims to provide a high-modulus glass fiber composition. The composition can significantly increase the modulus of glass fiber, significantly reduce the refining temperature of molten glass, and improve the refining performance of molten glass; it can also optimize the hardening rate of molten glass, improve the cooling performance of glass fiber and reduce the crystallization rate. The composition is suitable for large-scale production of high-modulus glass fiber.

In accordance with one aspect of the present invention, there is provided a composition for producing high-modulus glass fiber, the composition comprising percentage by weight of the following components:

| | |
|---|---|
| SiO₂ | 43-58% |
| Al₂O₃ | 15.5-23% |
| MgO | 8-18% |
| Al₂O₃+MgO | ≥25% |
| CaO | 0.1-7.5% |
| Y₂O₃ | 7.1-22% |
| MgO+Y₂O₃ | ≥16.5% |
| TiO₂ | 0.01-5% |
| Fe₂O₃ | 0.01-1.5% |
| Na₂O | 0.01-2% |
| K₂O | 0-1.5% |
| Li₂O | 0-0.9% |
| SrO | 0-4% |
| La₂O₃+CeO₂ | 0.5% |
| ZrO₂ | 0-2.4%, |

wherein the weight percentage ratio C3 = Y₂O₃/CaO is greater than or equal to 2.1.

In a class of this embodiment, the composition comprises the following components expressed as percentage by weight:

| | |
|---|---|
| SiO₂ | 43-58% |
| Al₂O₃ | 15.5-23% |
| MgO | 8-18% |
| Al₂O₃+MgO | ≥25% |
| CaO | 0.1-7.5% |
| Y₂O₃ | 7.1-22% |
| MgO+Y₂O₃ | ≥16.5% |
| TiO₂ | 0.01-5% |
| Fe₂O₃ | 0.01-1.5% |
| Na₂O | 0.01-2% |
| K₂O | 0-1.5% |
| Li₂O | 0-0.9% |
| SrO | 0-4% |
| La₂O₃+CeO₂ | 0-5% |
| ZrO₂ | 0-2%_{∘} |

In a class of this embodiment, the composition comprises the following components expressed as percentage by weight:

| | |
|---|---|
| SiO₂ | 43-58% |
| Al₂O₃ | 15.5-23% |
| MgO | 8-18% |
| Al₂O₃+MgO | ≥25% |
| CaO | 0.1-7.5% |
| Y₂O₃ | 7.1-22% |
| MgO+Y₂O₃ | ≥16.5% |
| TiO₂ | 0.01-5% |
| Fe₂O₃ | 0.01-1.5% |
| Na₂O | 0.01-2% |
| K₂O | 0-1.5% |
| Li₂O | 0-0.9% |
| SrO | 0-4% |
| La₂O₃+CeO₂ | 0-5% |

In addition, the total weight percentage of the above components is greater than or equal to 98%.

In a class of this embodiment, the weight percentage ratio C1=MgO/CaO is greater than or equal to 1.7.

In a class of this embodiment, the weight percentage ratio C2=Y₂O₃/MgO is greater than or equal to 0.8.

The weight percentage ratio C3=Y₂O₃/CaO is greater than or equal to 2**.**1**.**

In a class of this embodiment, the weight percentage ratio C4= A1₂O₃/Y₂O₃ is 1-2.5.

In a class of this embodiment, the content range of Y₂O₃ is 10.1-20% by weight.

In a class of this embodiment, the content range of SiO₂ is 44-55.9% by weight.

In a class of this embodiment, the content range of Al₂O₃ is 15.8-20.4% by weight.

In a class of this embodiment, the content range of MgO is 9-15% by weight.

In a class of this embodiment, the content range of CaO is 0.5-5.9% by weight.

In a class of this embodiment, the weight percentage ratio C1= MgO/CaO is greater than or equal to 1.7, and the weight percentage ratio C2=Y₂O₃/MgO is greater than or equal to 0.8.

In a class of this embodiment, the weight percentage ratio C1= MgO/CaO is greater than or equal to 2.0, and the weight percentage ratio C2=Y₂O₃/MgO is greater than or equal to 0.9.

In a class of this embodiment, the weight percentage ratio C2=Y₂O₃/MgO is greater than or equal to 0.8, and the weight percentage ratio C3=Y₂O₃/CaO is greater than or equal to 2.1.

In a class of this embodiment, the weight percentage ratio C1= MgO/CaO is greater than or equal to 1.7, the weight percentage ratio C2=Y₂O₃/MgO is greater than or equal to 0.8, and the weight percentage ratio C3=Y₂O₃/CaO is greater than or equal to 2.1.

In a class of this embodiment, the composition comprises the following components expressed as percentage by weight:

| | |
|---|---|
| SiO₂ | 44-55.9% |
| Al₂O₃ | 15.5-23% |
| MgO | 8-18% |
| Al₂O₃+MgO | ≥25% |
| CaO | 0.1-7.5% |
| Y₂O₃ | 10.1-20% |
| MgO+Y₂O₃ | 18.1-33% |
| TiO₂ | 0.01-5% |
| Fe₂O₃ | 0.01-1.5% |
| Na₂O | 0.01-2% |
| K₂O | 0-1.5% |
| Li₂O | 0-0.9% |
| SrO | 0-4% |
| La₂O₃+CeO₂ | 0-5% |

In addition, the weight percentage ratio C1= MgO/CaO is greater than or equal to 1.7.

In a class of this embodiment, the composition comprises the following components expressed as percentage by weight:

| | |
|---|---|
| SiO₂ | 44-55.9% |
| Al₂O₃ | 15.8-20.4% |
| MgO | 8-16% |
| Al₂O₃+MgO | ≥26.5% |
| CaO | 0.1-6.5% |
| Y₂O₃ | 7.1-22% |
| MgO+Y₂O₃ | ≥16.5% |
| TiO₂ | 0.01-5% |
| Fe₂O₃ | 0.01-1.5% |
| Na₂O | 0.01-2% |
| K₂O | 0-1.5% |
| Li₂O | 0-0.9% |
| SrO | 0-4% |
| La₂O₃+CeO₂ | 0-5% |

In addition, the weight percentage ratio C1= MgO/CaO is greater than or equal to 1.7, and the weight percentage ratio C2=Y₂O₃/MgO is greater than or equal to 0.8.

In a class of this embodiment, the content range of CeO₂ is 0-2% by weight.

In a class of this embodiment, the composition further contains one or more of ZrO₂, ZnO, B₂O₃, F₂ and SO₃, the combined weight percentage being less than 4%.

In a class of this embodiment, the composition further contains 0-0.9% by weight of ZrO₂.

In a class of this embodiment, the composition comprises the following components expressed as percentage by weight:

| | |
|---|---|
| SiO₂ | 44-55.9% |
| Al₂O₃ | 15.5-23% |
| MgO | 8-18% |
| Al₂O₃+MgO | ≥25% |
| CaO | 0.1-7.5% |
| Y₂O₃ | 7.1-22% |
| MgO+Y₂O₃ | ≥16.5% |
| TiO₂ | 0.01-5% |
| Fe₂O₃ | 0.01-1.5% |
| Na₂O | 0.01-2% |
| K₂O | 0-1.5% |
| Li₂O | 0-0.9% |
| SrO | 0-4% |
| La₂O₃+CeO₂ | 0-5% |

In addition, the total weight percentage of the above components is greater than or equal to 99.5%.

In a class of this embodiment, the composition may be free of B₂O₃.

In a class of this embodiment, the composition may be free of MnO.

In a class of this embodiment, the composition may produce a molten glass that has a refining temperature of less than or equal to 1460°C.

According to another aspect of this invention, a glass fiber produced with said glass fiber composition is provided.

According to yet another aspect of this invention, a composite material incorporating said glass fiber is provided.

In the high-modulus glass fiber composition according to the present invention, by introducing a high content of Y₂O₃, reasonably configuring the respective content ranges of SiO₂, Al₂O₃, Y₂O₃, CaO and MgO as well as the ratios therebetween, controlling the content ranges of alkali earth metal oxides and alkali metal oxides as well as the ratios therebetween, and controlling the content ranges of (Al₂O₃+MgO) and (MgO+Y₂O₃) respectively, while utilizing the special compensation effect and accumulation effect of yttrium ions in the glass structure as well as the mixed effect of alkali earth metal, enhancing the synergistic effects between magnesium ions and calcium ions, between yttrium ions and magnesium ions, between yttrium ions and calcium ions, and between yttrium ions and aluminum ions, and further controlling the ratios of MgO/CaO, Y₂O₃/MgO, Y₂O₃/CaO and Al₂O₃/Y₂O₃ respectively, the composition enables a more compact stacking structure of the glass and a higher difficulty of ions reorganization and arrangement during the crystallization process. Therefore, the composition for producing a glass fiber of this invention can significantly increase the glass modulus and reduce the glass crystallization rate. In the meantime, the composition can also significantly reduce the glass refining temperature, improve the refining performance, optimize the hardening rate of molten glass, and improve the cooling performance of glass fiber.

Specifically, the high-modulus glass fiber composition according to the present invention comprises the following components expressed as percentage by weight:

| | |
|---|---|
| SiO₂ | 43-58% |
| Al₂O₃ | 15.5-23% |
| MgO | 8-18% |
| Al₂O₃+MgO | ≥25% |
| CaO | 0.1-7.5% |
| Y₂O₃ | 7.1-22% |
| MgO+Y₂O₃ | ≥16.5% |
| TiO₂ | 0.01-5% |
| Fe₂O₃ | 0.01-1.5% |
| Na₂O | 0.01-2% |
| K₂O | 0-1.5% |
| Li₂O | 0-0.9% |
| SrO | 0-4% |
| La₂O₃+CeO₂ | 0.5% |
| ZrO₂ | 0-2.4%, |

wherein the weight percentage ratio C3 = Y₂O₃/CaO is greater than or equal to 2.1.

The effect and content of each component in said glass fiber composition is described as follows:
SiO₂ is a main oxide forming the glass network. Compared with the S-glass, in order to increase the glass modulus, the glass fiber composition according to the present invention contains a significantly reduced amount of silica while introducing a high content of yttrium oxide. In the glass fiber composition of the present invention, the content range of SiO₂ is 43-58%. Preferably, the SiO₂ content range can be 44-57%, more preferably 44-55.9%, even more preferably 45-54.9%, and still even more preferably 45-54%.
Al₂O₃ is another oxide forming the glass network. When combined with SiO₂, it can have a substantive effect on the mechanical properties of the glass. Too low of an Al₂O₃ content will make it impossible to obtain sufficiently high mechanical properties, while too high of an Al₂O₃ content will significantly increase the risk of crystallization. Therefore, the content range of Al₂O₃ in this invention is 15.5-23%. Preferably, the Al₂O₃ content can be 15.8-21%, more preferably 15.8-20.4%, even more preferably 16.5-19.8%, and still even more preferably 17-19.6%.

Further, in order to obtain sufficiently high mechanical properties of glass fiber and to reduce the fiber forming temperature, the sum of the weight percentages of SiO₂+Al₂O₃ can be 65-78%. Preferably, the sum of the weight percentages of SiO₂+Al₂O₃ can be 65-76%, more preferably 66-74.5%, and even more preferably 66-73%.

In the present invention, MgO and CaO mainly play the role of regulating the viscosity and crystallization of the glass. In the glass fiber composition of this invention, the weight percent range of MgO is 8-18%. Preferably, the weight percent range of MgO can be 8-16%, more preferably 9-15%, even more preferably 9.4-13.5%, and still even more preferably 9.4-12%. In the glass fiber composition of this invention, the weight percent range of CaO is 0.1-7.5%. Preferably, the weight percent range of CaO can be 0.1-6.5%, more preferably 0.5-5.9%, even more preferably 0.5-4.9%, and still even more preferably 1-4.5%.

In the high-modulus glass fiber according to the present invention, the sum of the weight percentages of Al₂O₃+MgO can be greater than or equal to 25%. Preferably, the sum of the weight percentages of Al₂O₃+MgO can be greater than or equal to 26%, more preferably can be 26-35%, and even more preferably 26.5-32%.

Y₂O₃ is an important rare earth oxide. As the external ions of the glass network, Y³⁺ ions have large coordination numbers, high field strength and high electric charge, and high accumulation capability, which would help improve the structural stability of the glass and increase the glass modulus and strength. In the glass fiber composition of this invention, the content range of Y₂O₃ is 7.1-22%. Preferably, the content range of Y₂O₃ is 8.1-22%, more preferably 10.1-20%, even more preferably 11.4-20%, and still even more preferably 12.3-20%. Furthermore, the content range of Y₂O₃ is preferably 13.1-20%, and more preferably 14.6-20%.

In the glass fiber composition of this invention, the sum of the weight percentages of Y₂O₃+MgO can be greater than or equal to 16.5%. Preferably, the sum of the weight percentages of Y₂O₃+MgO can be greater than or equal to 17.5%, more preferably can be 17.5-34%, and even more preferably 18.1-33%.

The Y³⁺ ions and Ca²⁺ ions can replace each other well for network filling, as their ionic radiuses are almost the same, 0.09nm for the Y³⁺ ion and 0.1nm for the Ca²⁺ ion, both being noticeably larger than that of either Al³⁺ (0.0535nm) or Mg²⁺ (0.072nm). Meanwhile, in the present invention, by considering the differences of field strength between Y³⁺ ions and Mg²⁺ ions, and between Y³⁺ ions and Ca²⁺ions, as well as the mixed alkali earth effect between Ca²⁺ ions and Mg²⁺ions, and by introducing a high amount of Y₂O₃ while properly controlling the ratios therebetween accordingly, the movement and arrangement of other ions in the glass would be effectively inhibited, so that the crystallization tendency of the glass is significantly minimized; also, the hardening rate of molten glass would be effectively regulated and the cooling performance of the glass would be improved. Further, the ratios of MgO/CaO, Y₂O₃/MgO, Y₂O₃/CaO and A1₂O₃/Y₂O₃ are rationally controlled in this invention, so that not only can a better effect of structural stacking be achieved, but also the crystal phases formed in the glass crystallization can be effectively restrained due to a strengthened competition among the crystal phases; and thus the crystallization tendency of the glass would be effectively controlled. The main crystal phases include cordierite (Mg₂Al₄Si₅O₈), anorthite (CaAl₂Si₂O₈), diopside (CaMgSi₂O₆), and a mixture thereof.

Further, the weight percentage ratio C1= MgO/CaO is greater than or equal to 1.7. Preferably, the weight percentage ratio C1 is greater than or equal to 2.0, more preferably greater than or equal to 2.3, and even more preferably greater than or equal to 2.5.

Further, the weight percentage ratio C2=Y₂O₃/MgO is greater than or equal to 0.8. Preferably, the weight percentage ratio C2 is greater than or equal to 0.9, more preferably greater than or equal to 1.0, and even more preferably greater than or equal to 1.1.

Further, the weight percentage ratio C3=Y₂O₃/CaO is greater than or equal to 2.1, more preferably greater than or equal to 2.3, and even more preferably greater than or equal to 2.9.

Further, the weight percentage ratio C4=A1₂O₃/Y₂O₃ is 1-2.5. Preferably, the weight percentage ratio C4 is 1-2.1, more preferably 1-2, and even more preferably 1.2-2.

Furthermore, the combined weight percentage of CaO+MgO can be 9-20%. Preferably, the combined weight percentage of CaO+MgO can be 9.5-18%, more preferably can be 9.5-17%, and even more preferably can be 10-16%.

Both Na₂O and K₂O can reduce glass viscosity and are good fluxing agents. Compared with Na₂O and K₂O, Li₂O can not only significantly reduce glass viscosity thereby improving the glass melting performance, but also help improve the mechanical properties of glass. However, the introduced amount of alkali metal oxides should be controlled, as the raw materials containing these oxides are very costly and, when there is an excessive amount of alkali metal ions in the glass fiber composition, the structural stability of the glass will be affected and thus the corrosion resistance of the glass will be noticeably impaired. Therefore, in the glass fiber composition according to the present invention, the content range of Na₂O is 0.01-2%, preferably 0.01-1.5%, more preferably 0.05-0.9%, and even more preferably 0.05-0.45%.

In the glass fiber composition according to the present invention, the content range of K₂O is 0-1.5%, preferably 0-1%, and more preferably 0-0.5%.

In the glass fiber composition according to the present invention, the content range of Li₂O is 0-0.9%, preferably 0-0.6%, more preferably 0-0.3%. In another embodiment of this invenition, the glass fiber composition can be free of Li₂O.

Further, the combined weight pecentage of Na₂O+K₂O+Li₂O can be 0.01-1.4%, preferably 0.05-0.9%. Further, the combined weight pecentage of Na₂O+K₂O can be 0.01-1.2%, preferably 0.05-0.7%.

TiO₂ can reduce the viscosity of glass at high temperatures and, with a synergistic effect produced in combination with titanium ions and yttrium ions, can improve the stacking effect and mechanical properties of the glass. In the glass fiber composition of this invention, the content range of TiO₂ is 0.01-5%, preferably 0.01-3%, more preferably 0.05-1.5%, and even more preferably 0.05-0.9%.

Fe₂O₃ facilitates the melting of glass and can also improve the crystallization performance of glass. However, since ferric ions have a coloring effect, the introduced amount should be limited. In the glass fiber composition of this invention, the content range of Fe₂O₃ is 0.01-1.5%, preferably 0.01-1%, and more preferably 0.05-0.8%.

SrO can reduce the glass viscosity and produce a synergistic effect of alkaline earth metal ions with calcium ions and magnesium ions, which can help further reduce the glass crystallization tendency. In the glass fiber composition of this invention, the content range of SrO is 0-4%, preferably 0-2%, more preferably 0-1%, and even more preferably 0-0.5%. In another embodiment of this invention, the glass fiber composition can be free of SrO.

La₂O₃ can reduce the glass viscosity and improve the mechanical properties of glass, and has a certain synergistic effect with yttrium ions, which can further reduce the crystallization tendency of glass. CeO₂ can enhance the crystallization tendency and refining performance of glass. In the glass fiber composition of this invention, the sum of the weight percentages of La₂O₃+CeO₂ can be 0-5%, preferably 0-3%, and more preferably 0-1.5%.

Further, the content range of La₂O₃ in the glass fiber composition of this invention can be 0-3%, preferably 0-1.5%. In another embodiment of this invention, the glass fiber composition can be free of La₂O₃. Further, the content range of CeO₂ in the glass fiber composition of this invention can be 0-2%, preferably 0-0.6%. In another embodiment of this invention, the glass fiber composition can be free of CeO₂.

In addition to the above-mentioned main components, the glass fiber composition according to the present invention can also contain a small amount of other components with a combined content less than or equal to 4% by weight.

Further, the glass fiber composition according to the present invention contains one or more of ZrO₂, ZnO, B₂O₃, F₂ and SO₃, and the total amount of ZrO₂, ZnO, B₂O₃, F₂ and SO₃ is less than 4% by weight. Further, the total amount of ZrO₂, CeO₂, ZnO, B₂O₃, F₂ and SO₃ is less than 2% by weight.

Further, the glass fiber composition according to the present invention contains one or more of Sm₂O₃, Sc₂O₃, Nd₂O₃, Eu₂O₃ and Gd₂O₃, and the total amount of Sm₂O₃, Sc₂O₃, Nd₂O₃, Eu₂O₃ and Gd₂O₃ is less than 4% by weight.

Further, the glass fiber composition according to the present invention contains one or more of Ho₂O₃, Er₂O₃, Tm₂O₃, Tb₂O₃ and Lu₂O₃, and the total amount of Ho₂O₃, Er₂O₃, Tm₂O₃, Tb₂O₃ and Lu₂O₃ is less than 2% by weight.

Further, the glass fiber composition according to the present invention contains either or both of Nb₂O₅ and Ta₂O₅ with a combined content of less than 2% by weight.

Further, the glass fiber composition according to the present invention contains ZrO₂ with a content range of 0-2.4% by weight. Further, the content range of ZrO₂ can be 0-0.9%, and still further can be 0-0.3%. In another embodiment of this invention, the glass fiber composition can be free of ZrO₂.

Further, the glass fiber composition according to the present invention contains B₂O₃ with a content range of 0-2% by weight. In another embodiment of this invention, the glass fiber composition can be free of B₂O₃.

Further, the glass fiber composition according to the present invention contains F₂ with a content range of 0-1% by weight. Further, the content range of F₂ can be 0-0.5%. Further, the glass fiber composition according to the present invention contains SO₃ with a content range of 0-0.5% by weight.

Further, the combined weight percentage of other components can be less than or equal to 2%, and further can be less than or equal to 1%, and still further can be less than or equal to 0.5%.

Further, the refining temperature of the glass fiber composition according to the present invention can be less than or equal to 1485 °C. Further, the refining temperature can be less than or equal to 1460 °C, and still further less than or equal to 1445 °C.

Further, the modulus of glass fiber formed from the glass fiber composition of this invention can be greater than or equal to 95 GPa. Further, the modulus of glass fiber can be 97-115 GPa.

In the glass fiber composition according to the present invention, the beneficial effects produced by the aforementioned selected ranges of the components will be explained by way of examples through the specific experimental data.

The following are examples of preferred content ranges of the components contained in the glass fiber composition according to the present invention.

### Preferred example 1

The high-modulus glass fiber composition according to the present invention comprises the following components expressed as percentage by weight:

| | |
|---|---|
| SiO₂ | 44-55.9% |
| Al₂O₃ | 15.8-20.4% |
| MgO | 8-18% |
| Al₂O₃+MgO | ≥25% |
| CaO | 0.1-7.5% |
| Y₂O₃ | 7.1-22% |
| MgO+Y₂O₃ | ≥16.5% |
| TiO₂ | 0.01-5% |
| Fe₂O₃ | 0.01-1.5% |
| Na₂O | 0.01-2% |
| K₂O | 0-1.5% |
| Li₂O | 0-0.9% |
| SrO | 0-4% |
| La₂O₃+CeO₂ | 0-5% |

wherein, the total weight percentage of the above components is greater than or equal to 98%, the weight percentage ratio C1= MgO/CaO is greater than or equal to 1.7, and the weight percentage ratio C2=Y₂O₃/MgO is greater than or equal to 0.8.

### Preferred example 2

The high-modulus glass fiber composition according to the present invention comprises the following components expressed as percentage by weight:

| | |
|---|---|
| SiO₂ | 44-55.9% |
| Al₂O₃ | 15.8-20.4% |
| MgO | 8-16% |
| Al₂O₃+MgO | ≥26.5% |
| CaO | 0.1-6.5% |
| Y₂O₃ | 7.1-22% |
| MgO+Y₂O₃ | ≥16.5% |
| TiO₂ | 0.01-5% |
| Fe₂O₃ | 0.01-1.5% |
| Na₂O | 0.01-2% |
| K₂O | 0-1.5% |
| Li₂O | 0-0.9% |
| SrO | 0-4% |
| La₂O₃+CeO₂ | 0-5% |

wherein, the weight percentage ratio C1= MgO/CaO is greater than or equal to 2.0, and the weight percentage ratio C2=Y₂O₃/MgO is greater than or equal to 0.9.

### Preferred example 3

The high-modulus glass fiber composition according to the present invention comprises the following components expressed as percentage by weight:

| | |
|---|---|
| SiO₂ | 44-55.9% |
| Al₂O₃ | 15.8-21% |
| MgO | 9.4-13.5% |
| Al₂O₃+MgO | ≥26.5% |
| CaO | 0.1-6.5% |
| Y₂O₃ | 10.1-20% |
| MgO+Y₂O₃ | 19.5-33% |
| TiO₂ | 0.01-5% |
| Fe₂O₃ | 0.01-1.5% |
| Na₂O | 0.01-2% |
| K₂O | 0-1.5% |
| Li₂O | 0-0.9% |
| SrO | 0-4% |
| La₂O₃+CeO₂ | 0-5% |

### Preferred example 4

The high-modulus glass fiber composition according to the present invention comprises the following components expressed as percentage by weight:

| | |
|---|---|
| SiO₂ | 44-55.9% |
| Al₂O₃ | 15.5-23% |
| MgO | 8-18% |
| Al₂O₃+MgO | ≥25% |
| CaO | 0.1-7.5% |
| Y₂O₃ | 7.1-22% |
| MgO+Y₂O₃ | ≥16.5% |
| TiO₂ | 0.01-5% |
| Fe₂O₃ | 0.01-1.5% |
| Na₂O | 0.01-2% |
| K₂O | 0-1.5% |
| Li₂O | 0-0.9% |
| SrO | 0-4% |
| La₂O₃+CeO₂ | 0-5% |
| ZrO₂ | 0-0.3% |

wherein, the weight percentage ratio C1= MgO/CaO is greater than or equal to 1.7.

### Preferred example 5

The high-modulus glass fiber composition according to the present invention comprises the following components expressed as percentage by weight:

| | |
|---|---|
| SiO₂ | 44-55.9% |
| Al₂O₃ | 15.5-23% |
| MgO | 8-18% |
| Al₂O₃+MgO | ≥25% |
| CaO | 0.1-7.5% |
| Y₂O₃ | 7.1-22% |
| MgO+Y₂O₃ | ≥16.5% |
| TiO₂ | 0.01-5% |

| | |
|---|---|
| Fe₂O₃ | 0.01-1.5% |
| Na₂O | 0.01-2% |
| K₂O | 0-1.5% |
| Li₂O | 0-0.9% |
| SrO | 0-4% |
| La₂O₃+CeO₂ | 0-5% |

wherein, the total weight percentage of the above components is greater than or equal to 98%, the weight percentage ratio C2=Y₂O₃/MgO is greater than or equal to 0.8., and the weight percentage ratio C3=Y₂O₃/CaO is greater than or equal to 2.1.

### Preferred example 6

The high-modulus glass fiber composition according to the present invention comprises the following components expressed as percentage by weight:

| | |
|---|---|
| SiO₂ | 43-58% |
| Al₂O₃ | 15.5-23% |
| MgO | 8-18% |
| Al₂O₃+MgO | ≥25% |
| CaO | 0.1-7.5% |
| Y₂O₃ | 7.1-22% |
| MgO+Y₂O₃ | ≥16.5% |
| TiO₂ | 0.01-5% |
| Fe₂O₃ | 0.01-1.5% |
| Na₂O | 0.01-2% |
| K₂O | 0-1.5% |
| Li₂O | 0-0.9% |
| SrO | 0-4% |
| La₂O₃+CeO₂ | 0-5% |

wherein, the weight percentage ratio C1= MgO/CaO is greater than or equal to 1.7, the weight percentage ratio C2=Y₂O₃/MgO is greater than or equal to 0.8, and the weight percentage ratio C3=Y₂O₃/CaO is greater than or equal to 2.9.

### Preferred example 7

The high-modulus glass fiber composition according to the present invention comprises the following components expressed as percentage by weight:

| | |
|---|---|
| SiO₂ | 44-55.9% |
| Al₂O₃ | 15.5-23% |
| MgO | 8-18% |
| Al₂O₃+MgO | ≥25% |
| CaO | 0.1-7.5% |
| Y₂O₃ | 7.1-22% |
| MgO+Y₂O₃ | ≥16.5% |
| TiO₂ | 0.01-5% |
| Fe₂O₃ | 0.01-1.5% |
| Na₂O | 0.01-2% |
| K₂O | 0-1.5% |
| Li₂O | 0-0.9% |
| SrO | 0-4% |
| La₂O₃+CeO₂ | 0-5% |

wherein, the weight percentage ratio C3=Y₂O₃/CaO is greater than or equal to 2.9.

### Preferred example 8

The high-modulus glass fiber composition according to the present invention comprises the following components expressed as percentage by weight:

| | |
|---|---|
| SiO₂ | 43-58% |
| Al₂O₃ | 15.5-23% |
| MgO | 8-18% |
| Al₂O₃+MgO | ≥25% |
| CaO | 0.1-7.5% |
| Y₂O₃ | 7.1-22% |
| MgO+Y₂O₃ | ≥16.5% |
| TiO₂ | 0.01-5% |
| Fe₂O₃ | 0.01-1.5% |
| Na₂O | 0.01-2% |
| K₂O | 0-1.5% |
| Li₂O | 0-0.9% |
| SrO | 0-4% |
| La₂O₃+CeO₂ | 0-5% |

wherein, the weight percentage ratio C1= MgO/CaO is greater than or equal to 1.7, the weight percentage ratio C2=Y₂O₃/MgO is greater than or equal to 0.8, and the weight percentage ratio C4= Al₂O₃/Y₂O₃ is 1-2.

### DETAILED DESCRIPTION OF THE INVENTION

In order to better clarify the purposes, technical solutions and advantages of the examples of the present invention, the technical solutions in the examples of the present invention are clearly and completely described below. Obviously, the examples described herein are just part of the examples of the present invention and are not all the examples. All other exemplary embodiments obtained by one skilled in the art on the basis of the examples in the present invention without performing creative work shall all fall into the scope of protection of the present invention. What needs to be made clear is that, as long as there is no conflict, the examples and the features of examples in the present application can be arbitrarily combined with each other.

The basic concept of the present invention is that the components of the glass fiber composition expressed as percentage by weight are: 43-58% of SiO₂, 15.5-23% of Al₂O₃, 8-18% of MgO, greater than or equal to 25% of (Al₂O₃+MgO), 0.1-7.5% of CaO, 7.1-22% of Y₂O₃, greater than or equal to 16.5% of (MgO+Y₂O₃), 0.01-5% of TiO₂, 0.01-1.5% of Fe₂O₃, 0.01-2% of Na₂O, 0-1.5% of K₂O, 0-0.9% of Li₂O, 0-4% of SrO, 0-5% of (La₂O₃ +CeO₂) , and 0-2.4% ZrO₂, wherein the weight percentage ratio C3 = Y₂O₃/CaO is greater than or equal to 2.1. The composition can significantly increase the modulus of glass fiber, significantly reduce the refining temperature of molten glass, and improve the refining performance of molten glass; it can also optimize the hardening rate of molten glass, improve the cooling performance of glass fiber and reduce the crystallization rate. The composition is suitable for large-scale production of high-modulus glass fiber.

The specific content values of SiO₂, Al₂O₃, MgO, CaO, Y₂O₃, TiO₂, Fe₂O₃, Na₂O, K₂O, Li₂O, SrO, La₂O₃, CeO₂ and ZrO₂ in the glass fiber composition of the present invention are selected to be used in the examples, and comparisons with the improved R glass, designated as B1, as disclosed in the patent WO2016165506A2, the traditional R glass designated as B2, and the S glass designated as B3, are made in terms of the following eight property parameters,
(1) Forming temperature, the temperature at which the glass melt has a viscosity of 10³ poise and which represents the typical temperature for fiber formation.
(2) Liquidus temperature, the temperature at which the crystal nucleuses begin to form when the glass melt cools off-i.e., the upper limit temperature for glass crystallization.
(3) Refining temperature, the temperature at which the glass melt has a viscosity of 10² poise and which represents the relative difficulty in refining molten glass and eliminating bubbles from the glass. Generally, when a refining temperature is lower, it will be more efficient to refine molten glass and eliminate bubbles under the same temperature.
(4) ΔT value, which is the difference between the forming temperature and the liquidus temperature and indicates the temperature range at which fiber drawing can be performed.
(5) ΔL value, which is the difference between the refining temperature and the forming temperature and indicates the hardening rate of molten glass. It can be used to represent the difficulty of glass melt cooling during fiber formation. Generally speaking, if the ΔL value is relatively small, the glass melt will be easier to cool off under the same fiberizing conditions, which is conducive to efficient drawing of glass fiber.
(6) Elastic modulus, the modulus defining the ability of glass to resist elastic deformation, which is to be measured on bulk glass according to ASTM E1876. It can be used to represent the modulus property of glass fiber.
(7) Crystallization area ratio, to be determined in a procedure set out as follows: Cut the bulk glass appropriately to fit in with a porcelain boat trough and then place the cut glass bar sample into the porcelain boat. Put the porcelain boat with the pretreated glass bar sample into a gradient furnace for crystallization and keep the sample for heat preservation for 5 hours. Take the porcelain boat with the sample out of the gradient furnace and air-cool it to room temperature. Finally, examine and measure the amounts and dimensions of crystals on the surfaces of each sample within a temperature range of 1050-1150°C, from a microscopic view by using an optical microscope, and then calculate the relative area ratio of crystallization with reference to S glass. A high area ratio would mean a high crystallization tendency and a high crystallization rate.
(8) Bubbles content, to be determined in a procedure set out as follows: Use special molds to compress the glass batch materials in each example into samples of same shape and dimension, which will then be placed on the sample platform of a high temperature microscope. Heat the samples according to standard procedures up to the pre-set temperature of 1500°C, and then directly cool them off with the cooling of the microscope to the ambient temperature without heat preservation. Finally, each of the glass samples is examined under an optical microscope to determine the amount of bubbles in the samples, and then calculate the relative bubbles content with reference to S glass. The higher the bubbles content is, the more difficult the refining of the glass will be, and the quality of the molten glass will be hard to be guaranteed. Wherein, the amounts of bubbles are identified according to the magnification of the microscope.

The aforementioned eight parameters and the methods of measuring them are well-known to one skilled in the art. Therefore, these aforementioned parameters can be effectively used to explain the properties of the glass fiber composition according to the present invention.

The specific procedures for the experiments are as follows: Each component can be acquired from the appropriate raw materials. Mix the raw materials in the appropriate proportions so that each component reaches the final expected weight percentage. The mixed batch is melted and refined. Then the molten glass is drawn out through the tips of the bushings, thereby forming the glass fiber. The glass fiber is attenuated onto the rotary collet of a winder to form cakes or packages. Of course, traditional methods can be used to further process these glass fibers to meet the expected requirements.

Comparisons of the property parameters used in the examples of the glass fiber composition according to the present invention with those of the S glass, traditional R glass and improved R glass are further made below by way of tables, wherein the component contents of the compositions for producing glass fibers are expressed in weight percentage. What needs to be made clear is that the total amount of the components in an example is slightly less than 100%, and it should be understood that the remaining amount is trace impurities or a small amount of components which cannot be analyzed.

Example A29 is not according to the invention.

**Table 1A**

| | | A1 | A2 | A3 | A4 | A5 | A6 | A7 |
|---|---|---|---|---|---|---|---|---|
| Component | SiO₂ | 53.2 | 52.0 | 53.0 | 54.4 | 54.4 | 54.4 | 54.4 |
| | Al₂O₃ | 18.7 | 19.3 | 18.7 | 17.5 | 18.1 | 18.7 | 18.7 |
| | CaO | 2.9 | 5.9 | 4.9 | 4.0 | 3.4 | 3.4 | 4.8 |
| | MgO | 11.5 | 9.2 | 10.4 | 13.5 | 12.6 | 12.0 | 10.6 |
| | Y₂O₃ | 12.4 | 12.4 | 11.5 | 9.2 | 10.1 | 10.1 | 10.1 |
| | Na₂O | 0.15 | 0.05 | 0.05 | 0.25 | 0.25 | 0.25 | 0.25 |
| | K₂O | 0.25 | 0.25 | 0.25 | 0.25 | 0.25 | 0.25 | 0.25 |
| | Li₂O | 0 | 0 | 0 | 0 | 0 | 0 | 0 |
| | Fe₂O₃ | 0.35 | 0.35 | 0.35 | 0.35 | 0.35 | 0.35 | 0.35 |
| | TiO₂ | 0.45 | 0.45 | 0.45 | 0.45 | 0.45 | 0.45 | 0.45 |
| | SrO | 0 | 0 | 0 | 0 | 0 | 0 | 0 |
| | La₂O₃ | 0 | 0 | 0 | 0 | 0 | 0 | 0 |
| | CeO₂ | 0 | 0 | 0.30 | 0 | 0 | 0 | 0 |
| Ratio | C1 | 3.97 | 1.56 | 2.12 | 3.38 | 3.71 | 3.53 | 2.21 |
| | C2 | 1.08 | 1.35 | 1.11 | 0.68 | 0.80 | 0.84 | 0.95 |
| | C3 | 4.28 | 2.10 | 2.35 | 2.30 | 2.97 | 2.97 | 2.10 |
| | C4 | 1.51 | 1.56 | 1.63 | 1.90 | 1.79 | 1.85 | 1.85 |
| Parameter | Forming temperature /°C | 1283 | 1274 | 1280 | 1279 | 1284 | 1286 | 1290 |
| | Liquidus temperature /°C | 1236 | 1220 | 1225 | 1253 | 1248 | 1242 | 1230 |
| | Refining temperature /°C | 1443 | 1432 | 1440 | 1439 | 1445 | 1447 | 1452 |
| | ΔT/°C | 47 | 54 | 55 | 26 | 36 | 44 | 60 |
| | ΔL/°C | 160 | 158 | 160 | 160 | 161 | 161 | 162 |
| | Elastic modulus /GPa | 105.0 | 103.0 | 104.0 | 103.2 | 103.8 | 103.0 | 102.2 |
| | Crystallization area ratio /% | 9 | 4 | 5 | 15 | 12 | 10 | 5 |
| | Bubbles content/% | 6 | 4 | 3 | 5 | 7 | 8 | 9 |

**Table 1B**

| | | A8 | A9 | A10 | A11 | A12 | A13 | A14 |
|---|---|---|---|---|---|---|---|---|
| Component | SiO₂ | 54.0 | 49.8 | 51.0 | 52.5 | 55.9 | 52.5 | 56.8 |
| | Al₂O₃ | 19.0 | 21.0 | 20.4 | 19.8 | 18.6 | 18.6 | 16.5 |
| | CaO | 3.8 | 4.0 | 4.0 | 4.0 | 4.0 | 4.0 | 3.3 |
| | MgO | 11.0 | 9.4 | 10.0 | 10.0 | 10.0 | 10.0 | 10.4 |
| | Y₂O₃ | 10.5 | 14.4 | 13.2 | 12.3 | 10.1 | 13.5 | 11.6 |
| | Na₂O | 0.10 | 0.45 | 0.45 | 0.45 | 0.45 | 0.45 | 0.20 |
| | K₂O | 0.40 | 0.20 | 0.20 | 0.20 | 0.20 | 0.20 | 0.30 |
| | Li₂O | 0.30 | 0 | 0 | 0 | 0 | 0 | 0 |
| | Fe₂O₃ | 0.20 | 0.35 | 0.35 | 0.35 | 0.35 | 0.35 | 0.40 |
| | TiO₂ | 0.60 | 0.30 | 0.30 | 0.30 | 0.30 | 0.30 | 0.40 |
| | SrO | 0 | 0 | 0 | 0 | 0 | 0 | 0 |
| | La₂O₃ | 0 | 0 | 0 | 0 | 0 | 0 | 0 |
| | CeO₂ | 0 | 0 | 0 | 0 | 0 | 0 | 0 |
| Ratio | C1 | 2.89 | 2.35 | 2.50 | 2.50 | 2.50 | 2.50 | 3.15 |
| | C2 | 0.95 | 1.53 | 1.32 | 1.23 | 1.01 | 1.35 | 1.12 |
| | C3 | 2.76 | 3.60 | 3.30 | 3.08 | 2.53 | 3.38 | 3.52 |
| | C4 | 1.81 | 1.46 | 1.55 | 1.61 | 1.84 | 1.38 | 1.42 |
| Parameter | Forming temperature /°C | 1281 | 1276 | 1278 | 1284 | 1295 | 1280 | 1294 |
| | Liquidus temperature /°C | 1235 | 1245 | 1238 | 1235 | 1230 | 1220 | 1232 |
| | Refining temperature /°C | 1443 | 1433 | 1437 | 1445 | 1460 | 1440 | 1460 |
| | ΔT/°C | 46 | 31 | 40 | 49 | 65 | 60 | 62 |
| | ΔL/°C | 162 | 157 | 159 | 161 | 165 | 160 | 166 |
| | Elastic modulus /GPa | 103.5 | 106.0 | 105.3 | 103.8 | 102.6 | 105.0 | 102.0 |
| | Crystallization area ratio /% | 7 | 16 | 7 | 6 | 6 | 4 | 6 |
| | Bubbles content/% | 6 | 5 | 4 | 6 | 11 | 5 | 10 |

**Table 1C**

| | | A15 | A16 | A17 | A18 | A19 | A20 | A21 |
|---|---|---|---|---|---|---|---|---|
| Component | SiO₂ | 53.5 | 52.0 | 54.0 | 56.5 | 55.0 | 53.5 | 52.2 |
| | Al₂O₃ | 18.9 | 18.9 | 18.9 | 18.5 | 18.5 | 18.7 | 18.7 |
| | CaO | 2.4 | 1.0 | 3.3 | 3.7 | 3.7 | 3.0 | 3.5 |
| | MgO | 10.7 | 10.7 | 10.2 | 10.4 | 10.8 | 11.0 | 10.0 |
| | Y₂O₃ | 13.1 | 16.0 | 12.0 | 8.5 | 8.1 | 11.4 | 13.5 |
| | Na₂O | 0.30 | 0.30 | 0.30 | 0.30 | 0.30 | 0.30 | 0.30 |
| | K₂O | 0.20 | 0.20 | 0.20 | 0.20 | 0.20 | 0.20 | 0.20 |
| | Li₂O | 0 | 0 | 0.50 | 0 | 0 | 0 | 0 |
| | Fe₂O₃ | 0.40 | 0.40 | 0.30 | 0.30 | 0.30 | 0.40 | 0.30 |
| | TiO₂ | 0.40 | 0.40 | 0.30 | 1.50 | 0.90 | 0.40 | 0.30 |
| | SrO | 0 | 0 | 0 | 0 | 0 | 1.00 | 0 |
| | La₂O₃ | 0 | 0 | 0 | 0 | 2.00 | 0 | 0 |
| | CeO₂ | 0 | 0 | 0 | 0 | 0.10 | 0 | 0 |
| | ZrO₂ | 0 | 0 | 0 | 0 | 0 | 0 | 0.90 |
| Ratio | C1 | 4.46 | 10.70 | 3.09 | 2.81 | 2.92 | 3.67 | 2.86 |
| | C2 | 1.22 | 1.50 | 1.18 | 0.82 | 0.75 | 1.04 | 1.35 |
| | C3 | 5.46 | 16.00 | 3.64 | 2.30 | 2.19 | 3.80 | 3.86 |
| | C4 | 1.44 | 1.18 | 1.58 | 2.18 | 2.28 | 1.64 | 1.39 |
| Parameter | Forming temperature /°C | 1291 | 1287 | 1269 | 1290 | 1285 | 1288 | 1286 |
| | Liquidus temperature /°C | 1238 | 1255 | 1231 | 1238 | 1225 | 1230 | 1224 |
| | Refining temperature /°C | 1452 | 1445 | 1429 | 1455 | 1449 | 1450 | 1446 |
| | ΔT/°C | 53 | 32 | 38 | 52 | 60 | 58 | 62 |
| | ΔL/°C | 161 | 158 | 160 | 165 | 164 | 162 | 160 |
| | Elastic modulus /GPa | 104.5 | 106.3 | 105.2 | 101.5 | 100.5 | 103.5 | 105.5 |
| | Crystallization area ratio /% | 10 | 14 | 8 | 12 | 3 | 5 | 5 |
| | Bubbles content/% | 8 | 7 | 3 | 6 | 7 | 8 | 7 |

**Table 1D**

| | | A22 | A23 | A24 | A25 | A26 | A27 | A28 |
|---|---|---|---|---|---|---|---|---|
| Component | SiO₂ | 54.9 | 54.9 | 53.0 | 51.9 | 52.4 | 52.0 | 50.0 |
| | Al₂O₃ | 18.0 | 19.2 | 19.2 | 19.2 | 18.6 | 19.6 | 18.6 |
| | CaO | 3.0 | 3.0 | 3.0 | 3.0 | 3.0 | 4.0 | 3.0 |
| | MgO | 11.4 | 10.4 | 10.4 | 10.4 | 10.2 | 10.6 | 10.2 |
| | Y₂O₃ | 11.0 | 11.0 | 12.9 | 14.0 | 14.6 | 12.6 | 17.0 |
| | Na₂O | 0.20 | 0.20 | 0.20 | 0.20 | 0.25 | 0.25 | 0.25 |
| | K₂O | 0.30 | 0.30 | 0.30 | 0.30 | 0.20 | 0.20 | 0.20 |
| | Li₂O | 0 | 0 | 0.10 | 0.10 | 0 | 0 | 0 |
| | Fe₂O₃ | 0.40 | 0.40 | 0.40 | 0.40 | 0.35 | 0.35 | 0.35 |
| | TiO₂ | 0.40 | 0.40 | 0.40 | 0.40 | 0.30 | 0.30 | 0.30 |
| | SrO | 0 | 0 | 0 | 0 | 0 | 0 | 0 |
| | La₂O₃ | 0 | 0 | 0 | 0 | 0 | 0 | 0 |
| | CeO₂ | 0 | 0.10 | 0 | 0 | 0 | 0 | 0 |
| | ZrO₂ | 0.30 | 0 | 0 | 0 | 0 | 0 | 0 |
| Ratio | C1 | 3.80 | 3.47 | 3.47 | 3.47 | 3.40 | 2.65 | 3.40 |
| | C2 | 0.96 | 1.06 | 1.24 | 1.35 | 1.43 | 1.19 | 1.67 |
| | C3 | 3.67 | 3.67 | 4.30 | 4.67 | 4.87 | 3.15 | 5.67 |
| | C4 | 1.64 | 1.75 | 1.49 | 1.37 | 1.27 | 1.56 | 1.09 |
| Parameter | Forming temperature /°C | 1288 | 1293 | 1284 | 1276 | 1278 | 1282 | 1260 |
| | Liquidus temperature /°C | 1236 | 1233 | 1230 | 1225 | 1220 | 1235 | 1217 |
| | Refining temperature /°C | 1451 | 1457 | 1445 | 1434 | 1437 | 1441 | 1416 |
| | ΔT/°C | 52 | 60 | 54 | 51 | 58 | 47 | 43 |
| | ΔL/°C | 163 | 164 | 161 | 158 | 159 | 159 | 156 |
| | Elastic modulus /GPa | 103.5 | 103.0 | 104.5 | 105.7 | 106.5 | 104.5 | 108.0 |
| | Crystallization area ratio /% | 8 | 7 | 6 | 5 | 4 | 7 | 3 |
| | Bubbles content/% | 8 | 10 | 6 | 4 | 5 | 6 | 4 |

**Table 1E**

| | | A29 | A30 | A31 | A32 | B1 | B2 | B3 |
|---|---|---|---|---|---|---|---|---|
| Component | SiO₂ | 57.0 | 53.4 | 52.0 | 52.5 | 60.1 | 60 | 65 |
| | Al₂O₃ | 18.5 | 18.7 | 19.3 | 18.7 | 17.0 | 25 | 25 |
| | CaO | 4.5 | 4.5 | 5.5 | 2.5 | 10.2 | 9 | 0 |
| | MgO | 10.0 | 10.4 | 9.4 | 11.5 | 9.8 | 6 | 10 |
| | Y₂O₃ | 8.1 | 11.4 | 12.6 | 13.5 | 0.5 | 0 | 0 |
| | Na₂O | 0.25 | 0.45 | 0.05 | 0.15 | 0.21 | Trace amount | Trace amount |
| | K₂O | 0.25 | 0.25 | 0.25 | 0.25 | 0.41 | Trace amount | Trace amount |
| | Li₂O | 0.5 | 0 | 0 | 0 | 0.65 | 0 | 0 |
| | Fe₂O₃ | 0.35 | 0.35 | 0.35 | 0.35 | 0.44 | Trace amount | Trace amount |
| | TiO₂ | 0.45 | 0.45 | 0.45 | 0.45 | 0.44 | Trace amount | Trace amount |
| | SrO | 0 | 0 | 0 | 0 | 0 | 0 | 0 |
| | La₂O₃ | 0 | 0 | 0 | 0 | 0 | 0 | 0 |
| | CeO₂ | 0 | 0 | 0 | 0 | 0 | 0 | 0 |
| | ZrO₂ | 0 | 0 | 0 | 0 | 0 | 0 | 0 |
| Ratio | C1 | 2.22 | 2.31 | 1.71 | 4.60 | 0.96 | 0.67 | - |
| | C2 | 0.81 | 1.10 | 1.34 | 1.17 | 0.05 | 0 | 0 |
| | C3 | 1.80 | 2.53 | 2.29 | 5.40 | 0.05 | 0 | - |
| | C4 | 2.28 | 1.64 | 1.53 | 1.39 | 34.00 | - | - |
| Parameter | Forming temperature /°C | 1293 | 1286 | 1275 | 1284 | 1300 | 1430 | 1571 |
| | Liquidus temperature /°C | 1235 | 1227 | 1220 | 1234 | 1208 | 1350 | 1470 |
| | Refining temperature /°C | 1459 | 1448 | 1433 | 1444 | 1498 | 1620 | >1700 |
| | ΔT/°C | 58 | 59 | 55 | 50 | 92 | 80 | 101 |
| | ΔL/°C | 166 | 162 | 158 | 160 | 198 | 200 | - |
| | Elastic modulus /GPa | 101.9 | 103.0 | 103.5 | 106.0 | 90.9 | 89 | 90 |
| | Crystallization area ratio /% | 7 | 5 | 4 | 7 | 20 | 70 | 100 |
| | Bubbles content/% | 7 | 6 | 4 | 5 | 30 | 75 | 100 |

It can be seen from the values in the above tables that, compared with the composition of S glass, the glass fiber composition according to the present invention has the following advantages: (1) much higher elastic modulus; (2) much lower refining temperature and bubbles content, which means the molten glass of the present invention is easier to refine and the bubbles are easier to be discharged; and (3) much lower fiber forming temperature, liquidus temperature and crystallization area ratio.

Compared with the composition of the traditional R glass, the glass fiber composition according to the present invention has the following advantages: (1) much higher elastic modulus; (2) much lower refining temperature and bubbles content, which means the molten glass of the present invention is easier to refine and the bubbles are easier to be discharged; (3) much lower ΔL value, which helps increase the fiber drawing efficiency as the molten glass is easier to cool off; and (4) much lower fiber forming temperature, liquidus temperature and crystallization area ratio.

Compared with the composition of the improved R glass, the glass fiber composition according to the present invention has the following advantages: (1) much higher elastic modulus; (2) much lower refining temperature and bubbles content, which means the molten glass of the present invention is easier to refine and the bubbles are easier to be discharged; (3) much lower ΔL value, which helps increase the fiber drawing efficiency as the molten glass is easier to cool off; and (4) a lower crystallization area ratio, which means the molten glass of the present invention has relatively low crystallization rate and thus help reduce the crystallization risk.

Therefore, it can be concluded that the glass fiber composition according to the present invention has made a breakthrough in terms of glass modulus, refining and cooling performance, and crystallization rate. According to the present invention, under equal conditions, the modulus of glass is greatly raised, the refining temperature of molten glass is significantly lowered, the amount of bubbles in the molten glass is reduced and the glass shows excellent cooling performance. The overall technical solution of the present invention is excellent.

The glass fiber composition according to the present invention can be used for making glass fibers having the aforementioned excellent properties.

The glass fiber composition according to the present invention in combination with one or more organic and/or inorganic materials can be used for preparing composite materials having excellent performance, such as glass fiber reinforced base materials.

It is to be noted that, in this text, the terms "comprise/comprising", "contain/containing" and any other variants thereof are non-exclusive, so that any process, method, object or device containing a series of elements contains not only such factors, but also other factors not listed clearly, or further contains inherent factors of the process, method, object or device. Without further restrictions, a factor defined by the statement "comprises/comprising an/a ... ", "contain/containing an/a ..." or any other variants thereof does not exclude other identical factors in the process, method, object or device including said factors.

The foregoing embodiments are provided only for describing instead of limiting the technical solutions of the present invention. While particular embodiments of the invention have been shown and described, it will be obvious to one skilled in the art that modifications can be made to the technical solutions embodied by all the aforementioned embodiments, or that equivalent replacements can be made to some of the technical features embodied by all the aforementioned embodiments.

### INDUSTRIAL APPLICABILITY OF THE INVENTION

The high-modulus glass fiber composition according to the present invention can significantly increase the modulus of glass fiber, significantly reduce the refining temperature of molten glass, and improve the refining performance of molten glass; it can also optimize the hardening rate of molten glass, improve the cooling performance of glass fiber and reduce the crystallization rate. The composition is suitable for large-scale production of high-modulus glass fiber.

Compared with conventional glass fiber compositions, the glass fiber composition according to the present invention has made a breakthrough in terms of glass modulus, refining and cooling performance, and crystallization rate. According to the present invention, under equal conditions, the modulus of glass is greatly raised, the refining temperature of molten glass is significantly lowered, the amount of bubbles in the molten glass is reduced and the glass shows excellent cooling performance. The overall technical solution of the present invention is excellent.

Therefore, the present invention has good industrial applicability.

## Claims

1. A high-modulus glass fiber composition, comprising the following components with corresponding amounts by weight percentage:
| | |
|---|---|
| SiO₂ | 43-58% |
| Al₂O₃ | 15.5-23% |
| MgO | 8-18% |
| Al₂O₃+MgO | ≥25% |
| CaO | 0.1-7.5% |
| Y₂O₃ | 7.1-22% |
| MgO+Y₂O₃ | ≥16.5% |
| TiO₂ | 0.01-5% |
| Fe₂O₃ | 0.01-1.5% |
| Na₂O | 0.01-2% |
| K₂O | 0-1.5% |
| Li₂O | 0-0.9% |
| SrO | 0-4% |
| La₂O₃+CeO₂ | 0-5% |
| ZrO₂ | 0-2.4% |
wherein a weight percentage ratio C3=Y₂O₃/CaO is greater than or equal to 2.1.

2. The high-modulus glass fiber composition of claim 1, comprising the following components with corresponding amounts by weight percentage:
| | |
|---|---|
| SiO₂ | 43-58% |
| Al₂O₃ | 15.5-23% |
| MgO | 8-18% |
| Al₂O₃+MgO | ≥25% |
| CaO | 0.1-7.5% |
| Y₂O₃ | 7.1-22% |
| MgO+Y₂O₃ | ≥16.5% |
| TiO₂ | 0.01-5% |
| Fe₂O₃ | 0.01-1.5% |
| | |
|---|---|
| Na₂O | 0.01-2% |
| K₂O | 0-1.5% |
| Li₂O | 0-0.9% |
| SrO | 0-4% |
| La₂O₃+CeO₂ | 0-5% |
| ZrO₂ | 0-2% |

3. The high-modulus glass fiber composition of claim 1, comprising the following components with corresponding amounts by weight percentage:
| | |
|---|---|
| SiO₂ | 43-58% |
| Al₂O₃ | 15.5-23% |
| MgO | 8-18% |
| Al₂O₃+MgO | ≥25% |
| CaO | 0.1-7.5% |
| Y₂O₃ | 7.1-22% |
| MgO+Y₂O₃ | ≥16.5% |
| TiO₂ | 0.01-5% |
| Fe₂O₃ | 0.01-1.5% |
| Na₂O | 0.01-2% |
| K₂O | 0-1.5% |
| Li₂O | 0-0.9% |
| SrO | 0-4% |
| La₂O₃+CeO₂ | 0-5% |
wherein a total weight percentage of the above components is greater than or equal to 98%.

4. The high-modulus glass fiber composition of claim 1, wherein a weight percentage ratio C1=MgO/CaO is greater than or equal to 1.7.

5. The high-modulus glass fiber composition of claim 1, wherein a weight percentage ratio C2=Y₂O₃/MgO is greater than or equal to 0.8.

6. The high-modulus glass fiber composition of claim 1, wherein a weight percentage ratio C4= A1₂O₃/Y₂O₃ is 1-2.5.

7. The high-modulus glass fiber composition of claim 1, wherein the weight percentage of Y₂O₃ is 10.1-20%.

8. The high-modulus glass fiber composition of claim 1, wherein the weight percentage of SiO₂ is 44-55.9%.

9. The high-modulus glass fiber composition of claim 1, wherein the weight percentage of Al₂O₃ is 15.8-20.4%.

10. The high-modulus glass fiber composition of claim 1, wherein a weight percentage ratio C1=MgO/CaO is greater than or equal to 1.7, and a weight percentage ratio C2=Y₂O₃/MgO is greater than or equal to 0.8.

11. The high-modulus glass fiber composition of claim 1, comprising the following components with corresponding amounts by weight percentage:
| | |
|---|---|
| SiO₂ | 44-55.9% |
| Al₂O₃ | 15.5-23% |
| MgO | 8-18% |
| Al₂O₃+MgO | ≥25% |
| CaO | 0.1-7.5% |
| Y₂O₃ | 10.1-20% |
| MgO+Y₂O₃ | 18.1-33% |
| TiO₂ | 0.01-5% |
| Fe₂O₃ | 0.01-1.5% |
| Na₂O | 0.01-2% |
| K₂O | 0-1.5% |
| Li₂O | 0-0.9% |
| SrO | 0-4% |
| La₂O₃+CeO₂ | 0-5% |
wherein a weight percentage ratio C1=MgO/CaO is greater than or equal to 1.7.

12. The high-modulus glass fiber composition of claim 1, further comprising one or more of ZnO, B₂O₃, F₂ and SO₃, with a combined weight percentage being less than 4%.

13. A glass fiber, being produced using any of the compositions of claims 1-12.

14. A composite material, incorporating the glass fiber of claim 13.

## Patentansprüche

1. Glasfaserzusammensetzung mit hohem E-Modul, umfassend die folgenden Komponenten mit entsprechenden Mengen in Gewichtsprozent:
| | |
|---|---|
| SiO₂ | 43-58% |
| Al₂O₃ | 15,5-23% |
| MgO | 8-18% |
| Al₂O₃+MgO | ≥ 25% |
| CaO | 0,1-7,5% |
| Y₂O₃ | 7,1-22% |
| MgO+Y₂O₃ | ≥ 16,5% |
| TiO₂ | 0,01-5% |
| Fe₂O₃ | 0,01-1,5% |
| Na₂O | 0,01-2% |
| K₂O | 0-1,5 % |
| Li₂O | 0-0,9% |
| SrO | 0-4% |
| La₂O₃+CeO₂ | 0-5% |
| ZrO₂ | 0-2,4% |
wobei das Gewichtsprozentverhältnis C3 = Y₂O₃/CaO größer oder gleich 2,1 ist.

2. Glasfaserzusammensetzung mit hohem E-Modul gemäß Anspruch 1, umfassend die folgenden Komponenten mit entsprechenden Mengen in Gewichtsprozent:
| | |
|---|---|
| SiO₂ | 43-58% |
| Al₂O₃ | 15,5-23% |
| | |
|---|---|
| MgO | 8-18% |
| Al₂O₃+MgO | ≥ 25% |
| CaO | 0,1-7,5% |
| Y₂O₃ | 7,1-22% |
| MgO+Y₂O₃ | ≥ 16,5% |
| TiO₂ | 0,01-5% |
| Fe₂O₃ | 0,01-1,5% |
| Na₂O | 0,01-2% |
| K₂O | 0-1,5 % |
| Li₂O | 0-0,9% |
| SrO | 0-4% |
| La₂O₃+CeO₂ | 0-5% |
| ZrO₂ | 0-2% |

3. Glasfaserzusammensetzung mit hohem E-Modul gemäß Anspruch 1, umfassend die folgenden Komponenten mit entsprechenden Mengen in Gewichtsprozent:
| | |
|---|---|
| SiO₂ | 43-58% |
| Al₂O₃ | 15,5-23% |
| MgO | 8-18% |
| Al₂O₃+MgO | ≥ 25% |
| CaO | 0,1-7,5% |
| Y₂O₃ | 7,1-22% |
| MgO+Y₂O₃ | ≥ 16,5% |
| TiO₂ | 0,01-5% |
| Fe₂O₃ | 0,01-1,5% |
| Na₂O | 0,01-2% |
| K₂O | 0-1,5 % |
| Li₂O | 0-0,9% |
| SrO | 0-4% |
| La₂O₃+CeO₂ | 0-5% |
wobei der Gesamtgewichtsprozentanteil der obigen Komponenten größer oder gleich 98% ist.

4. Glasfaserzusammensetzung mit hohem E-Modul gemäß Anspruch 1, wobei das Gewichtsprozentverhältnis C1 = MgO/CaO größer oder gleich 1,7 ist.

5. Glasfaserzusammensetzung mit hohem E-Modul gemäß Anspruch 1, wobei das Gewichtsprozentverhältnis C2 = Y₂O_{3/}MgO größer oder gleich 0,8 ist.

6. Glasfaserzusammensetzung mit hohem E-Modul gemäß Anspruch 1, wobei das Gewichtsprozentverhältnis C4 = Al₂O_{3/}Y₂O₃ 1-2,5 beträgt.

7. Glasfaserzusammensetzung mit hohem E-Modul gemäß Anspruch 1, wobei der Gewichtsprozentanteil von Y₂O₃ 10,1-20% beträgt.

8. Glasfaserzusammensetzung mit hohem E-Modul gemäß Anspruch 1, wobei der Gewichtsprozentanteil von SiO₂ 44-55,9% beträgt.

9. Glasfaserzusammensetzung mit hohem E-Modul gemäß Anspruch 1, wobei der Gewichtsprozentanteil von Al₂O₃ 15,8-20,4% beträgt.

10. Glasfaserzusammensetzung mit hohem E-Modul gemäß Anspruch 1, wobei das Gewichtsprozentverhältnis C1 = MgO/CaO größer oder gleich 1,7 ist und das Gewichtsprozentverhältnis C2 = Y₂O_{3/}MgO größer oder gleich 0,8 ist.

11. Glasfaserzusammensetzung mit hohem E-Modul gemäß Anspruch 1, umfassend die folgenden Komponenten mit entsprechenden Mengen in Gewichtsprozent:
| | |
|---|---|
| SiO₂ | 44-55,9% |
| Al₂O₃ | 15,5-23% |
| MgO | 8-18% |
| Al₂O₃+MgO | ≥ 25% |
| CaO | 0,1-7,5% |
| Y₂O₃ | 10,1-20% |
| MgO+Y₂O₃ | 18,1-33% |
| TiO₂ | 0,01-5% |
| Fe₂O₃ | 0,01-1,5% |
| Na₂O | 0,01-2% |
| K₂O | 0-1,5 % |
| Li₂O | 0-0,9% |
| SrO | 0-4% |
| La₂O₃+CeO₂ | 0-5% |
wobei das Gewichtsprozentverhältnis C1 = MgO/CaO größer oder gleich 1,7 ist.

12. Glasfaserzusammensetzung mit hohem E-Modul gemäß Anspruch 1, weiterhin umfassend eines oder mehrere aus ZnO, B₂O₃, F₂ und SO₃, wobei deren kombinierter Gewichtsprozentgehalt kleiner als 4% ist.

13. Glasfaser, die unter Verwendung einer der Zusammensetzungen gemäß den Ansprüchen 1-12 hergestellt ist.

14. Verbundstoff, in den die Glasfaser gemäß Anspruch 13 eingebaut ist.

## Revendications

1. Composition de fibre optique à haut module, comprenant les composants suivants en quantités correspondantes en pourcentages en poids :
| | |
|---|---|
| SiO₂ | 43-58 % |
| Al₂O₃ | 15,5-23 % |
| MgO | 8-18 % |
| Al₂O₃+MgO | ≥ 25 % |
| CaO | 0,1-7,5 % |
| Y₂O₃ | 7,1-22 % |
| MgO+Y₂O₃ | ≥ 16,5 % |
| TiO₂ | 0,01-1,5 % |
| Fe₂O₃ | 0,01-1,5 % |
| Na₂O | 0,01-2 % |
| K₂O | 1,5-5 % |
| Li₂O | 0-0,9 % |
| SrO | 0-4 % |
| La₂O₃+CeO₂ | 0-5 % |
| ZrO₂ | 0-2,4 % |
dans lequel un rapport de pourcentages en poids C3 = Y₂O₃/CaO est supérieur ou égal à 2,1.

2. Composition de fibre optique à haut module selon la revendication 1, comprenant les composants suivants en quantités correspondantes en pourcentages en poids :
| | |
|---|---|
| SiO₂ | 43-58 % |
| Al₂O₃ | 15,5-23 % |
| MgO | 8-18 % |
| Al₂O₃+MgO | ≥ 25 % |
| CaO | 0,1-7,5 % |
| Y₂O₃ | 7,1-22 % |
| MgO+Y₂O₃ | ≥ 16,5 % |
| TiO₂ | 0,01-1,5 % |
| Fe₂O₃ | 0,01-1,5 % |
| Na₂O | 0,01-2 % |
| K₂O | 1,5-5 % |
| Li₂O | 0-0,9 % |
| SrO | 0-4 % |
| La₂O₃+CeO₂ | 0-5 % |
| ZrO₂ | 0-2 % |

3. Composition de fibre optique à haut module selon la revendication 1, comprenant les composants suivants en quantités correspondantes en pourcentages en poids :
| | |
|---|---|
| SiO₂ | 43-58 % |
| Al₂O₃ | 15,5-23 % |
| MgO | 8-18 % |
| Al₂O₃+MgO | ≥ 25 % |
| CaO | 0,1-7,5 % |
| Y₂O₃ | 7,1-22 % |
| MgO+Y₂O₃ | ≥ 16,5 % |
| TiO₂ | 0,01-1,5 % |
| Fe₂O₃ | 0,01-1,5 % |
| Na₂O | 0,01-2 % |
| K₂O | 1,5-5 % |
| Li₂O | 0-0,9 % |
| SrO | 0-4 % |
| La₂O₃+CeO₂ | 0-5 % |
dans laquelle un pourcentage en poids total des composants précédents est supérieur ou égal à 98 %.

4. Composition de fibre optique à haut module selon la revendication 1, dans laquelle un rapport de pourcentages en poids C1 = MgO/CaO est supérieur ou égal à 1,7.

5. Composition de fibre optique à haut module selon la revendication 1, dans laquelle un rapport de pourcentages en poids C2 = Y₂O_{3/}MgO est supérieur ou égal à 0,8.

6. Composition de fibre optique à haut module selon la revendication 1, dans laquelle un rapport de pourcentages en poids C4 = Al₂O_{3/}Y₂O₃ est de 1 à 2,5.

7. Composition de fibre optique à haut module selon la revendication 1, dans laquelle le pourcentage en poids de Y₂O₃ est de 10,1 à 20 %.

8. Composition de fibre optique à haut module selon la revendication 1, dans laquelle le pourcentage en poids de SiO₂ est de 44 à 55,9 %.

9. Composition de fibre optique à haut module selon la revendication 1, dans laquelle le pourcentage en poids de Al₂O₃ est de 15,8 à 20,4 %.

10. Composition de fibre optique à haut module selon la revendication 1, dans laquelle un rapport de pourcentages en poids C1 = MgO/CaO est supérieur ou égal à 1,7, et un rapport de pourcentages en poids C2 = Y₂O_{3/}MgO est supérieur ou égal à 0,8.

11. Composition de fibre optique à haut module selon la revendication 1, comprenant les composants suivants en quantités correspondantes en pourcentages en poids :
| | |
|---|---|
| SiO₂ | 44-55,9 % |
| Al₂O₃ | 15,5-23 % |
| MgO | 8-18 % |
| Al₂O₃+MgO | ≥ 25 % |
| CaO | 0,1-7,5 % |
| Y₂O₃ | 10,1-20 % |
| MgO+Y₂O₃ | 18,1-33 % |
| TiO₂ | 0,01-1,5 % |
| Fe₂O₃ | 0,01-1,5 % |
| Na₂O | 0,01-2 % |
| K₂O | 1,5-5 % |
| Li₂O | 0-0,9 % |
| SrO | 0-4 % |
| La₂O₃+CeO₂ | 0-5 % |
dans laquelle un rapport de pourcentages en poids C1 = MgO/CaO est supérieur ou égal à 1,7.

12. Composition de fibre optique à haut module selon la revendication 1, comprenant en outre l'un ou plusieurs parmi ZnO, B₂O₃, F₂ et SO₃, le pourcentage en poids combiné étant inférieur à 4 %.

13. Fibre optique produite en utilisant l'une quelconque des compositions selon les revendications 1-12.

14. Matériau composite comprenant la fibre optique selon la revendication 13.
